# EUROPEAN PATENT SPECIFICATION

(11) **EP 2 975 307 B1**
(45) Date of publication and mention of the grant of the patent: **18.05.2016**
(21) Application number: 14177192.3
(22) Date of filing: 16.07.2014
(51) Int. Cl.: F16K 37/00, F16K 1/44

(54) **Valve, in particular radiator valve**
Ventil, insbesondere ein Heizkörperventil
Soupape, notamment une soupape de radiateur

(43) Date of publication of application: 20.01.2016
(73) Proprietor: Danfoss A/S, 6430 Nordborg (DK)
(72) Inventor: Nielsen, Peter Gammeljord, 7100 Vejle (DK); Clausen, Anders Østergaard, 8680 Ry (DK); Hesseldahl, Søren, 7182 Bredsten (DK)
(74) Representative: Knoblauch, Andreas

(56) References cited:
- DE-A1- 10 314 005

## Description

The present invention relates to a valve, in particular a radiator valve, comprising a housing, an inlet, an outlet, a valve seat arrangement between said inlet and said outlet, and a valve element movable relatively to said valve seat arrangement, wherein detecting means are provided for detecting a position of said valve element.

Such a valve is known from DE 39 00 866 C2. The valve element is driven by a motor acting on the valve element via a gearing. A rotating disk is arranged between the gearing and the valve element. The disk comprises markings so that the rotational position of the disk can be detected. The rotational position can be used to calculate the position of the valve element.

A further valve of the kind mentioned above is known from DE 197 42 098 C2. The valve element is driven by an electric motor. In order to detect a closing point of the valve element the motor is controlled to a constant rotational speed. The rotational speed is measured and low pass filtered. Thereafter, the first derivation of the filtered signal is calculated and it is detected whether the first derivation exceeds a predetermined value. In this case the closing point is detected.

In both valves it is rather complicated to detect the closing point. However, in connection with radiator valves there is a challenge in finding the valves closure point since finding the correct closure point is very important for the regulation precision.

DE 103 14 005 A1 discloses a valve comprising all the features referred in the preamble of claim 1 of the present invention.

Prior art valve seats are usually made of a hard material, e. g. metal, and the valve element is closing on the valve seat with a soft material, for example rubber. If there were "unlimited" power available it would be possible to squeeze the rubber on the valve seat and then detect a closure point with sufficient accuracy.But this again, in the long run, creates "problems" as rubber or other plastic material deforms over time and then both closing points and the regulating interval is changed over time.

The object underlying the invention is to give a simple way to define the position of the valve element and furthermore to find the closure point.

This object is solved in that said valve seat arrangement comprises at least a first valve seat and a second valve seat, at least one of said first valve seat and said second valve seat forming a reference valve seat, said valve element being movable to contact at least said reference valve seat.

In a standard radiator valve the valve element is usually covered with a soft material which finally contacts the valve seat. This soft material is then pressed onto the valve seat when the valve is going to close. Because of this soft and compressible material it is hard to exactly detect the point when the valve is closed. This drawback can be overcome when a second valve seat is provided with which the valve element can come into contact as well. The present invention is especially advantageous in connection with battery applications where limited power is available.

In a preferred embodiment said detect means detecting a contact between said valve element and said reference valve seat. Since at least two valve seats are available, one of the valve seats can be configured to allow the exact detection of the closing point, i. e. the point at which the valve element comes into contact with this reference valve seat. The valve can also be used for cooling purposes.

Preferably one of said valve seats forms a closing valve seat and another one of said valve seats forms a regulation valve seat. The valve is usually used for two purposes. One purpose is to regulate or control the flow of a fluid through the radiator or a heat exchanger of a cooling system. The other purpose is to interrupt this flow. Both functions are usually performed by the same valve seat. However, when at least two valve seats are available, these two functions can be assigned to different valve seats, respectively.

In this case it is preferred that said reference valve seat forms part of said regulating valve seat. This has the advantage that the regulating valve seat can be used to detect the closure point. The information of the closure point is necessary for an exact control of the valve. It is however not so important for the fully closure of the valve which can be achieved with another valve seat.

Preferably said valve element comprises a first face cooperating with said first valve seat and a second face cooperating with said second valve seat, said first face being different from that second face. One of said faces can be formed to facilitate the exact detection of the contact between the valve element and the reference valve seat and the other face can be configured for another purpose.

In this way it is preferred that one of said first face and said second face is a reference face cooperating with said reference valve seat, said reference face being harder than the at least one other face. A harder face is less compressible and allows therefore a more exact detection of the closure point.

Preferably said reference face is made of a metallic material, ceramic or hard plastic. The forces which can be produced within a valve normally are not high enough to compress a metallic material, ceramic or hard plastic. So both seats could be made of plastic with for example different hardness.

Preferably said valve element is incompressible in the region of said reference surface. Therefore, not only the face or surface of the valve element is incompressible but the valve element itself at least in an area between the reference surface and a valve stem or valve rod which is used to move the valve element is incompressible.

In a first preferred embodiment said first valve seat is arranged in parallel to said second valve seat. This allows for a simple machining of a housing bearing the valve seats. The two valve seats could also be concentrically arranged.

In this case it is preferred that said valve element comprises two parallel faces. This is a rather simple form of the valve element.

In another preferred embodiment one of said valve seats is a tapered, preferably conical valve seat, said tapered valve seat forming said regulating valve seat. In this case it is preferred that the valve element has a tapered reference face cooperating with the tapered valve seat. A tapered valve seat allows for a better control of the flow. It has usually the risk that rather high forces are necessary to move the tapered valve element out of a tapered valve seat when the conical valve seat is used to fully close the valve. In the present embodiment this is not necessary since the tapered valve seat is not used to fully close the valve. This function is realized by another valve seat.

Preferably said valve element is actuated by an actuator, said actuator forming said detection means. In this case no further detections means are necessary thus keeping the construction of the valve simple.

In this case it is preferred that said actuator is an electric motor. When an electric motor moves the valve element into contact with the reference valve seat so that no further movement is possible, a current consumption of the electric motor increases suddenly which can be used as a detection signal.

Preferably said electric motor is a step motor. In the step motor the position of the valve element can be detected with higher security.

Preferred examples of the invention will now be described in more detail with reference to the drawing, wherein:
- Fig. 1: shows a schematic cross-sectional view of a first embodiment,
- Fig. 2: shows a schematic cross-sectional view of a second embodiment,
- Fig. 3: shows a schematic cross-sectional view of a third embodiment,
- Fig. 4: shows different positions of a valve element in a valve according to fig. 1, and
- Fig. 5: shows a similar view to fig. 4 for the valve of fig. 3.

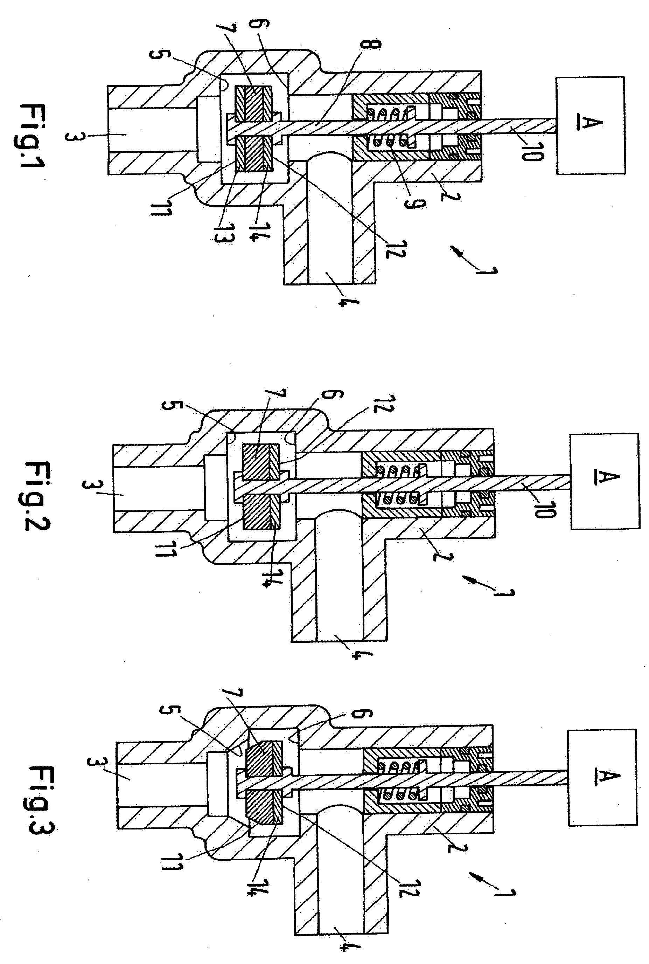

Fig. 1 schematically shows a valve 1 for a radiator or another heat exchanger in a heating or cooling system. The valve 1 has a housing 2. The housing 2 comprises an inlet 3 and an outlet 4. The inlet 3 and the outlet 4 could also be arranged at another angle as the one shown. In anyway, the housing can have different geometries for example angled, straight, right-angled, T-shaped, etc.

A valve seat arrangement having a first valve seat 5 and a second valve seat 6 is positioned between the inlet 3 and the outlet 4.

A valve element 7 is arranged between the two valve seats 5, 6. The valve element 7 is mounted at a valve stem 8. The valve stem 8 is loaded by a spring 9. The valve stem 8 comprises an end section 10 protruding out of the housing 2 so that an actuator A can act on the valve stem 8 in a direction opposite to the spring 9. The actuator A controls the position of the valve element 7. The actuator A performs the function of detecting means for detecting the position of the valve element 7. The actuator A is in a preferred embodiment an electric motor, in particular a step motor. However, other actuators can be used, for example bellows, heat expandable material, for example wax, or the like.

The actuator A has permanently an information or "knowledge" of the actual position of the valve element 7. Therefore, the actuator A can easily detect the actual position of the valve element 7. Consequently, the actuator A can detect a sudden stop of the valve element.

The valve element 7 comprises a first face 11 facing the first valve seat 5 and a second face 12 facing the second valve seat 6. The first face 11 is arranged at a first valve element cover 13. The second face 12 is arranged at a second valve element cover 14. The first valve element cover 13 is much harder than the second valve element cover 14. The second valve element cover 14 can be made of an elastic or elastomer material, for example plastic or rubber. The first valve element cover 13 can be made of not compressible material, e. g. a metallic material which is not compressible. When the actuator A moves the valve element in a direction towards the first valve seat 5, the first face 11 of the valve element 7 comes into contact with the first valve seat 5. Since the first valve element cover 13 is hard, the actuator A can immediately detect the contact between the first face 11 and the first valve seat 5. This detection can be made since the valve element 7 stops suddenly and a further movement of the valve element 7 is not possible. At this moment the position of the valve element 7 relative to the first valve seat 5 is fixed and gives an exact determination of a first closure point. The actuator A "knows" this position and can use this position information for the further control of the valve 1, in other words the actuator A can adjust the valve element 7 with respect to the first valve seat 5 so that a gap between the first face 11 and the first valve seat 5 is adjusted to a width which is required for the desired control of a fluid flowing through the valve 1.

Normally the hard seat and the associated valve element is used for regulation purposes (together, for example, with the closure point detection) as the material used does not deform over time. The soft valve element is only used to closure the valve in a leak tight manner and could also be used for regulations that do not need to be very precise. One could also imagine that "curves" for regulation purposes could be integrated in this hard material.

When the valve element 7 contacts the first valve seat 5, the position of the valve element 7 can exactly be determined. Therefore, the first valve seat 5 is a "reference valve seat".

Since the actuator A controls a flow of fluid through the valve 1 by adjusting a gap or a distance between the valve element 7 and the first valve seat 5, the first valve seat 5 forms at the same time a regulating valve seat.

The first face 11 is used to determine the exact position of the valve element 7. Therefore, the first face 11 is a reference face cooperating with the reference valve seat.

Since the first face 11 is quite hard, it is difficult to tightly close the valve 1 in a reliable manner by pressing the first face 11 on the first valve seat 5.

However, this is not necessary, since the second face 12 is much softer than the first face 11. When the valve element 7 is moved in a direction towards the second valve seat 6 and comes into contact with the second valve seat 6, it can be moved further thereby compressing the second valve element cover 14 and closing tightly the valve 1.

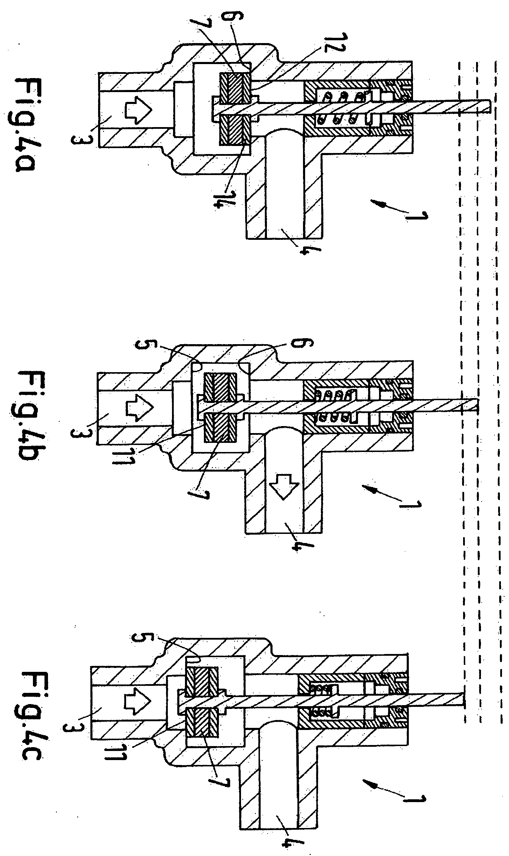

This situation is shown in fig. 4a. The valve element 7 has been moved so that the second face 12 comes to rest against the second valve seat 6. Since the second valve element cover 14 is rather soft, the valve element 7 can move further even after the first contact of the second face 12 with the second valve seat 6. This gives a tight seal. The valve 1 is closed. A fluid entering an inlet 3 cannot pass to the outlet 4.

Fig. 4b shows the valve element 7 in a position between the first valve seat 5 and the second valve seat 6. In this position the flow of fluid from the inlet 3 to the outlet 4 is controlled by the distance between the valve element 7, more precisely the first face 11 of the valve element 7, and the first valve seat 5.

Fig. 4c shows the position of the valve element 7 in which the first face 11 contacts the first valve seat 5. This position is the closure point of the valve 1. This closure point can easily be detected by the actuator A (not shown in fig. 4) since movement of the valve element 7 is possible only up to the closure point. However, when the closure point is reached, movement stops.

In this position the valve element 7 blocks a path from the inlet 3 to the outlet 4. However, it is possible that this fluid path is not fully tight.

Fig. 2 shows another embodiment of the valve 1. The same numerals are designated with the same reference number.

In this case the first valve element cover 13 is omitted. The valve element 7 contacts directly the first valve seat 5 when it is in the position shown in fig. 4c.

The valve element 7 itself is harder than the second valve element cover 14. Therefore, when the valve element 7 contacts the first valve seat 5, no further movement of the valve element 7 in a direction towards the first valve seat 5 is possible and the closure point can be detected with sufficient precision.

In the embodiments shown in figs. 1 and 2 the two valve seats 5, 6 are arranged in parallel. The valve element 7 has a cross section in form of a rectangle. The two faces 11, 12 of the valve elements 7 are arranged in parallel as well.

Fig. 3 shows a third embodiment of a valve 1. The same elements are designated with the same reference numerals.

The first valve seat 5 has a tapered or conical shape. The valve element 7 has a first face 11 being also formed conically. The conus angle of the first valve seat 5 and of the first face 11 are identical. The angles between the two conical faces could also be different from each other, for example 3 degrees or something else. The first face is made directly on the valve element 7.

The second valve element cover 14 forms a softer second face 12. Therefore, when the valve element is moved so that the second face 12 contacts the second valve seat 6 a tight closure of the valve 1 can be achieved.

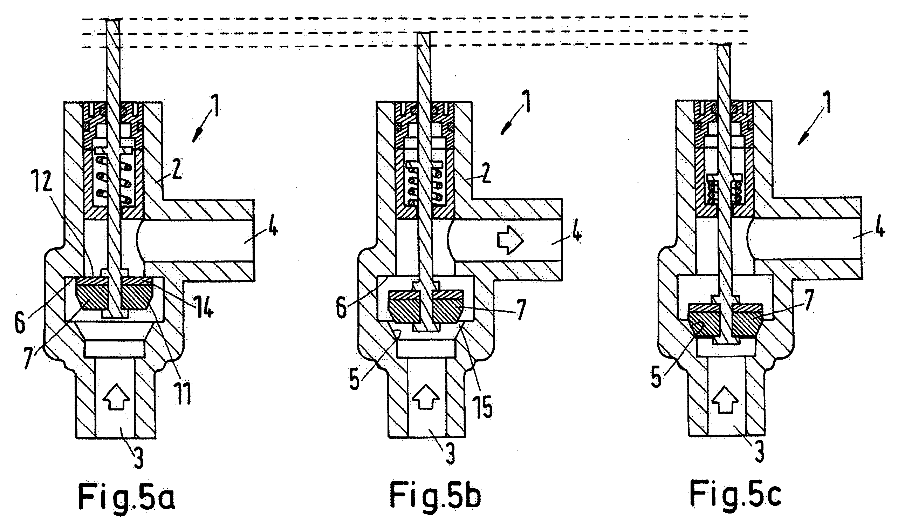

This situation is shown in fig. 5a. The second face 12 contacts the second valve seat 6. Since the second valve element cover 14 is soft enough, the valve 1 can be closed to interrupt any flow from the inlet 3 to the outlet 4.

In fig. 5b a situation is shown in which the valve element 7 is in a position between the first valve seat 5 and the second valve seat 6. A flow of fluid from the inlet 3 to the outlet 4 has to pass a gap 15 between the valve element 7 and the first valve seat 5. The position of the valve element 7 determines the width of this gap 15.

Fig. 5c shows the situation, in which the valve element 7 contacts the first valve seat 5 in order to detect the closure point of the valve 1.

The valve element 7 can be made of a metallic material, so that the first face 11 of the valve element 7 is formed of metallic material as well. This metallic material cannot be compressed so that the closure point of the valve 1 can be detected with sufficiently high precision.

The present invention has been described with a valve having a valve seat arrangement and a valve element arrangement. However, the invention can be used in connection with other types of valves as well in which the position of a valve element must be known, for example ball valves, sliding valves, etc. In this case the term "reference valve seat" should be replaced by "reference stop". The valve element or an element fixed to the valve element can then still have a reference face.

## Claims

1. Valve (1), in particular radiator valve comprising a housing (2), an inlet (3), an outlet (4), a valve seat arrangement (5, 6) between said inlet (3) and said outlet (4), and a valve element (7) movable relatively to said valve seat arrangement (5, 6), wherein detecting means (A) are provided for detecting a position of said valve element (7), wherein said valve seat arrangement (5, 6) comprises at least a first valve seat (5) and a second valve seat (6), at least one of said first valve seat (5) and said second valve seat (6) forming a reference valve seat, said valve element (7) being movable to contact at least said reference valve seat and wherein said valve element (7) comprises a first face (11) cooperating with said first valve seat (5) and a second face (12) cooperating with said second valve seat (6), said first face (11) being different from said second face (12) **characterized in that** one of said first face (11) and said second face (12) is a reference face cooperating with said reference valve seat, said reference face being harder than the at least one other face.

2. Valve according to claim 1, **characterized in that** said detecting means (A) detect a contact between said valve element (7) and said reference valve seat.

3. Valve according to claim 1 or 2, **characterized in that** one of said valve seats (5, 6) forms a closing valve seat (6) and another one of said valve seats forms a regulating valve seat (5).

4. Valve according to claim 3, **characterized in that** said reference valve seat forms part of said regulating valve seat (5).

5. Valve according to claim 1, **characterized in that** said reference face is made of a metallic material, ceramic or hard plastic.

6. Valve according to any of claims 1 to 5, **characterized in that** said valve element (7) is incompressible in the region of said reference face.

7. Valve according to any of claims 1 to 6, **characterized in that** said first valve seat (5) is arranged in parallel to said second valve seat (6).

8. Valve according to claim 7, **characterized in that** said valve element (7) comprises two parallel faces (11, 12).

9. Valve according to any of claims 1 to 6, **characterized in that** one of said valve seats (5, 6) is a conical valve seat, said conical valve seat forming said regulating valve seat.

10. Valve according to any of claims 1 to 9, **characterized in that** said valve element is actuated by an actuator (A), said actuator forming said detection means.

11. Valve according to claim 10, **characterized in that** said actuator (A) is an electric motor.

12. Valve according to claim 11, **characterized in that** said electric motor is a step motor.

## Patentansprüche

1. Ventil (1), insbesondere Heizkörperventil, umfassend ein Gehäuse (2), einen Einlass (3), einen Auslass (4), eine Ventilsitzanordnung (5, 6) zwischen dem Einlass (3) und dem Auslass (4) und ein Ventilelement (7), das in Bezug auf die Ventilsitzanordnung (5, 6) beweglich ist, wobei Erkennungsmittel (A) zum Erkennen einer Position des Ventilelements (7) bereitgestellt sind, wobei die Ventilsitzanordnung (5, 6) mindestens einen ersten Ventilsitz (5) und einen zweiten Ventilsitz (6) umfasst, wobei mindestens einer des ersten Ventilsitzes (5) und des zweiten Ventilsitzes (6) einen Referenzventilsitz bildet, wobei das Ventilelement (7) bewegt werden kann, um mindestens den Referenzventilsitz zu kontaktieren, und wobei das Ventilelement (7) eine erste Fläche (11), die mit dem ersten Ventilsitz (5) zusammenwirkt, und eine zweite Fläche (12) umfasst, die mit dem zweiten Ventilsitz (6) zusammenwirkt, wobei die erste Fläche (11) von der zweiten Fläche (12) verschieden ist, **dadurch gekennzeichnet, dass** eine der ersten Fläche (11) und der zweiten Fläche (12) eine Referenzfläche ist, die mit dem Referenzventilsitz zusammenwirkt, wobei die Referenzfläche härter als die mindestens eine andere Fläche ist.

2. Ventil nach Anspruch 1, **dadurch gekennzeichnet, dass** die Erkennungsmittel (A) einen Kontakt zwischen dem Ventilelement (7) und dem Referenzventilsitz erkennen.

3. Ventil nach Anspruch 1 oder 2, **dadurch gekennzeichnet, dass** einer der Ventilsitze (5, 6) einen schließenden Ventilsitz (6) bildet und ein anderer der Ventilsitze einen regulierenden Ventilsitz (5) bildet.

4. Ventil nach Anspruch 3, **dadurch gekennzeichnet, dass** der Referenzventilsitz einen Teil des regulierenden Ventilsitzes (5) bildet.

5. Ventil nach Anspruch 1, **dadurch gekennzeichnet, dass** die Referenzfläche aus einem metallischen Material, Keramik oder Hartkunststoff gefertigt ist.

6. Ventil nach einem der Ansprüche 1 bis 5, **dadurch gekennzeichnet, dass** das Ventilelement (7) in dem Bereich der Referenzfläche inkompressibel ist.

7. Ventil nach einem der Ansprüche 1 bis 6, **dadurch gekennzeichnet, dass** der erste Ventilsitz (5) parallel zu dem zweiten Ventilsitz (6) angeordnet ist.

8. Ventil nach Anspruch 7, **dadurch gekennzeichnet, dass** das Ventilelement (7) zwei parallele Flächen (11, 12) umfasst.

9. Ventil nach einem der Ansprüche 1 bis 6, **dadurch gekennzeichnet, dass** einer der Ventilsitze (5, 6) ein kegelförmiger Ventilsitz ist, wobei der kegelförmige Ventilsitz den regulierenden Ventilsitz bildet.

10. Ventil nach einem der Ansprüche 1 bis 9, **dadurch gekennzeichnet, dass** das Ventilelement von einem Aktor betätigt wird, wobei der Aktor (A) die Erkennungsmittel bildet.

11. Ventil nach Anspruch 10, **dadurch gekennzeichnet, dass** der Aktor (A) ein Elektromotor ist.

12. Ventil nach Anspruch 11, **dadurch gekennzeichnet, dass** der Elektromotor ein Schrittmotor ist.

## Revendications

1. Robinet (1), en particulier robinet de radiateur, comprenant un boîtier (2), une entrée (3), une sortie (4), un agencement (5, 6) de sièges de soupape entre ladite entrée (3) et ladite sortie (4) et un élément de soupape (7) mobile par rapport audit agencement (5, 6) de sièges de soupape, dans lequel des moyens de détection (A) sont mis en place pour détecter la position dudit élément de soupape (7), dans lequel ledit agencement (5, 6) de sièges de soupape comprend au moins un premier siège (5) de soupape et un seconde siège (6) de soupape, ledit premier siège (5) de soupape et/ou ledit second siège (6) de soupape constituant un siège de soupape de préférence, ledit élément de soupape (7) étant mobile pour venir au contact au moins dudit siège de soupape de référence, et dans lequel ledit élément de soupape (7) comprend une première face (11) coopérant avec ledit premier siège (5) de soupape et une seconde face (12) coopérant avec ledit second siège (6) de soupape, ladite première face (11) étant différente de ladite seconde face (12), **caractérisé en ce que** ladite première face (11) ou ladite seconde face (12) est une face de référence coopérant avec ledit siège de soupape de référence, ladite face de référence étant plus dure que ladite autre face.

2. Robinet selon la revendication 1, **caractérisé en ce que** lesdits moyens de detection (A) détectent un contact entre ledit élément de soupape (7) et ledit siège de soupape de référence.

3. Robinet selon la revendication 1 ou 2, **caractérisé en ce que** un desdits sièges (5, 6) de soupape constitue un siège (6) de soupape de fermeture et l'autre desdits sièges de soupape constitue un siège (5) de soupape de réglage.

4. Robinet selon la revendication 3, **caractérisé en ce que** ledit siège de soupape de référence fait partie dudit siège (5) de soupape de réglage.

5. Robinet selon la revendication 1, **caractérisé en ce que** ladite face de référence est faite en matériau métallique, en céramique ou en plastique dur.

6. Robinet selon l'une quelconque des revendications 1 à 5, **caractérisé en ce que** ledit élément de soupape (7) est incompressible dans la zone de ladite face de référence.

7. Robinet selon l'une quelconque des revendications 1 à 6, **caractérisé en ce que** ledit premier siège (5) de soupape est disposé parallèlement audit second siège (6) de soupape.

8. Robinet selon la revendication 7, **caractérisé en ce que** ledit élément de soupape (7) comprend deux faces (11, 12) parallèles.

9. Robinet selon l'une quelconque des revendications 1 à 6, **caractérisé en ce que** un desdits sièges (5, 6) de soupape est un siège de soupape conique, ledit siège de soupape conique constituant le siège de soupape de réglage.

10. Robinet selon l'une quelconque des revendications 1 à 9, **caractérisé en ce que** ledit élément de soupape est actionné par un actionneur (A), ledit actionneur constituant le moyen de détection.

11. Robinet selon la revendication 10, **caractérisé en ce que** ledit actionneur (A) est un moteur électrique.

12. Robinet selon la revendication 11, **caractérisé en ce que** ledit moteur électrique est un moteur pas à pas.
